# EUROPEAN PATENT SPECIFICATION

(11) **EP 4 310 835 B1**
(45) Date of publication and mention of the grant of the patent: **04.03.2026**
(21) Application number: 22771591.9
(22) Date of filing: 24.01.2022
(51) Int. Cl.: G10L 13/00, G10L 13/04, G10L 13/033

(54) **ELECTRONIC DEVICE AND PERSONALIZED TEXT-TO-SPEECH MODEL GENERATION METHOD BY ELECTRONIC DEVICE**
ELEKTRONISCHE VORRICHTUNG UND PERSONALISIERTES TEXT-ZU-SPRACHE-MODELLERZEUGUNGSVERFAHREN DURCH EINE ELEKTRONISCHE VORRICHTUNG
DISPOSITIF ÉLECTRONIQUE ET PROCÉDÉ DE GÉNÉRATION, PAR DISPOSITIF ÉLECTRONIQUE, DE MODÈLE TEXTE-PAROLE PERSONNALISÉ

(30) Priority: 16.03.2021 KR 20210034034
(43) Date of publication of application: 24.01.2024
(73) Proprietor: Samsung Electronics Co., Ltd., Suwon-si, Gyeonggi-do 16677 (KR)
(72) Inventor: SUNG, Junesig, Suwon-si Gyeonggi-do 16677 (KR); KIM, Kwanghoon, Suwon-si Gyeonggi-do 16677 (KR); PARK, Hyoungmin, Suwon-si Gyeonggi-do 16677 (KR)
(74) Representative: Nederlandsch Octrooibureau
(86) International application number: PCT/KR2022/001191
(87) International publication number: WO 2022/196925

(56) References cited:
- KR-A- 20190 085 882
- KR-A- 20190 104 269
- KR-A- 20200 145 776
- US-A1- 2021 074 261
- US-B1- 10 839 809
- US-B1- 9 978 359
- ERRO D. ET AL: "Personalized synthetic voices for speaking impaired: website and app", 6 September 2015 (2015-09-06), pages 1251 - 1254, XP093223884, Retrieved from the Internet <URL:https://www.isca-archive.org/interspeech_2015/erro15_interspeech.pdf> [retrieved on 20241112], DOI: 10.21437/Interspeech.2015-314
- COSI PIERO ET AL: "MIVOQ-PTTS -A Revolutionary New Way of Thinking TTS", 8 September 2016 (2016-09-08), pages 3888 - 3889, XP093223891, Retrieved from the Internet <URL:https://www3.pd.istc.cnr.it/piero/homepage/papers/PieroCosi/cp-INTERSPEECH2016-S&T.pdf> [retrieved on 20241112]

## Description

### BACKGROUND

### 1. Field

One or more embodiments of the instant disclosure generally relate to an electronic device and a personalized text-to-speech (P-TTS) model generation method of the electronic device.

### 2. Description of Related Art

Text-to-speech (TTS) refers to a technology for generating audio speech corresponding to a given text by learning and pairing text and sounds (e.g. spoken phonemes).

Personalized TTS (P-TTS) refers to a technology for generating audio speech corresponding to text, where the speech is of a voice of a target speaker. The P-TTS model for generating sounds that mimic the voice of the target speaker may be generated by updating weights of a base model, where the updating is done based on the sounds obtained from the target speaker. The relevant audio speech generated by TTS or received by an electronic device implementing TTS is referred to herein as a "sound source."

Document "Personalized synthetic voices for speaking impaired: website and app", published on 6 September 2015, discloses a web interface that assists users. More specifically, this document discloses an Android application that connects to the ZureTTS server and makes use of its functionalities in an intuitive way.

### SUMMARY

A personalized text-to-speech (P-TTS) model may be generated using deep learning algorithms. However, a great amount of computation may be required for deep learning, and it may not be easy to predict the performance of the model being trained. Thus, generating the P-TTS model may consume a great amount of time, and the P-TTS model generated by consuming such a great amount of time may not have the level of performance expected by the user.

According to an example embodiment, an electronic device includes a memory storing instructions and a processor configured to execute the instructions. When the instructions are executed by the processor, the processor may record a speech of a user corresponding to a text and obtain recorded data in which the text and the speech of the user are matched, store an intermediate model trained based on a portion of the recorded data while training a speech model to generate a P-TTS model corresponding to the user, generate an intermediate result from the training using the intermediate model and provide the generated intermediate result to the user, and receive feedback from the user on the intermediate result.

According to an example embodiment, an operation method of an electronic device includes recording a speech of a user corresponding to a text and obtaining recorded data in which the text and the speech of the user are matched, storing an intermediate model trained based on a portion of the recorded data while training a speech model to generate a P-TTS model corresponding to the user, generating an intermediate result from the training using the intermediate model and providing the generated intermediate result to the user, and receiving feedback from the user on the intermediate result.

Other features and aspects will be apparent from the following detailed description, the drawings, and the claims.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram illustrating an example integrated intelligence system according to an embodiment;
FIG. 2 is a diagram illustrating an example in which concept and action relationship information are stored in a database (DB) according to an embodiment;
FIG. 3 is a diagram illustrating example screens showing a user terminal processing a received voice input through an intelligent app according to an embodiment;
FIG. 4 is a diagram illustrating an example electronic device configured to generate a personalized text-to-speech (P-TTS) model according to an embodiment;
FIG. 5 is a diagram illustrating an example operation of generating a P-TTS model by an electronic device according to an embodiment;
FIG. 6 is a diagram illustrating an example operation of verifying data consistency and quantity by an electronic device according to an embodiment;
FIG. 7 is a diagram illustrating an example operation of training a speech model by an electronic device according to an embodiment;
FIG. 8 is a diagram illustrating an example operation of providing an intermediate result by an electronic device according to an embodiment;
FIG. 9 is a diagram illustrating an example operation of obtaining user feedback by an electronic device according to an embodiment;
FIG. 10 is a diagram illustrating an example operation of training a speech model based on additionally recorded data by an electronic device according to an embodiment;
FIG. 11 is a diagram illustrating an example operation of collecting additionally recorded data by an electronic device according to an embodiment;
FIG. 12 is a diagram illustrating an example operation of changing a training schedule by an electronic device according to an embodiment;
FIG. 13 is a diagram illustrating an example operation of training based on user feedback by an electronic device according to an embodiment;
FIG. 14 is a block diagram illustrating an example electronic device in a network environment according to an embodiment; and
FIG. 15 is a flowchart illustrating an example flow of operations performed by an electronic device according to an embodiment.

### DETAILED DESCRIPTION

Certain embodiments of the disclosure may provide the technology for obtaining feedback from the user in the middle of the learning or training process of the P-TTS model and improving the learning performance based on the obtained feedback to generate the P-TTS model.

According to certain embodiments described herein, by applying feedback from the user obtained in the middle of the process of training the P-TTS model, it is possible to generate the P-TTS model with a high level of performance and reduce the amount of time used to generate the P-TTS model.

However, technical aspects are not limited to the foregoing aspects, and other technical aspects may also be present. Additional aspects of example embodiments of the present disclosure will be set forth in part in the description which follows and, in part, will be apparent from the description, or may be learned by practice of the disclosure

Hereinafter, certain example embodiments will be described in greater detail with reference to the accompanying drawings. When describing the example embodiments with reference to the accompanying drawings, like reference numerals refer to like elements and a repeated description related thereto will be omitted.

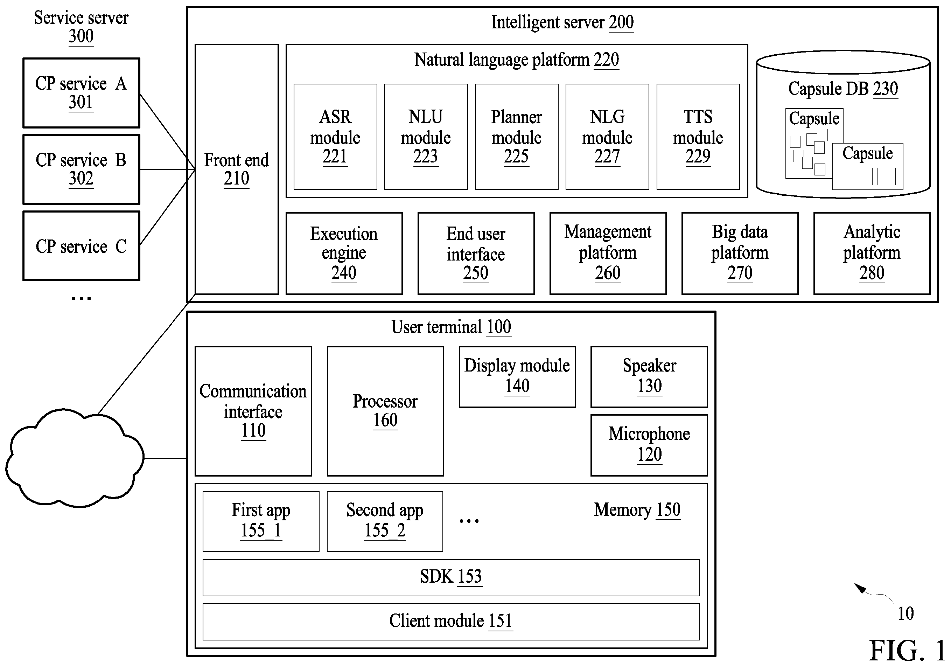

FIG. 1 is a block diagram illustrating an example integrated intelligence system according to an embodiment.

Referring to FIG. 1, according to an example embodiment, an integrated intelligence system 10 may include a user terminal 100, an intelligent server 200, and a service server 300.

The user terminal 100 may be a terminal device (or an electronic device) that is connectable to the Internet, for example, a mobile phone, a smartphone, a personal digital assistant (PDA), a laptop computer, a television (TV), a white home appliance, a wearable device, a head-mounted display (HMD), or a smart speaker.

As illustrated, the user terminal 100 may include a communication interface 110, a microphone 120, a speaker 130, a display module 140, a memory 150, or a processor 160. The components listed above may be operationally or electrically connected to each other.

According to an example embodiment, the communication interface 110 may be connected to an external device to transmit and receive data to and from the external device. The microphone 120 may receive sound (e.g., a user utterance) and convert the sound into an electrical signal. The speaker 130 may output the electrical signal as sound (e.g., voice or speech).

According to an example embodiment, the display module 140 may display image or video. The display module 140 may also display a graphical user interface (GUI) of an app (or an application program) being executed. The display module 140 may receive a touch input through a touch sensor. For example, the display module 140 may receive a text input through the touch sensor via an on-screen keyboard area displayed on the display module 140.

According to an example embodiment, the memory 150 may store a client module 151, a software development kit (SDK) 153, and a plurality of apps 155. The client module 151 and the SDK 153 may configure a framework (or a solution program) for performing general-purpose functions. In addition, the client module 151 or the SDK 153 may configure a framework for processing various user inputs (e.g., voice input, text input, and/or touch input).

According to an example embodiment, the apps 155 stored in the memory 150 may be programs for performing various designated functions. The apps 155 may include a first app 155_1, a second app 155_3, etc. The apps 155 may each implement a plurality of actions for performing the designated functions. For example, the apps 155 may include an alarm app, a message app, and/or a scheduling app. The apps 155 may be executed by the processor 160 to sequentially execute at least a portion of the actions.

According to an example embodiment, the processor 160 may control the overall operation of the user terminal 100. For example, the processor 160 may be electrically connected to the communication interface 110, the microphone 120, the speaker 130, and the display module 140 to perform a designated operation. The processor 160 may include a microprocessor or any suitable type of processing circuitry, such as one or more general-purpose processors (e.g., ARM-based processors), a Digital Signal Processor (DSP), a Programmable Logic Device (PLD), an Application-Specific Integrated Circuit (ASIC), a Field-Programmable Gate Array (FPGA), a Graphical Processing Unit (GPU), a video card controller, etc. In addition, it would be recognized that when a general purpose computer accesses code for implementing the processing shown herein, the execution of the code transforms the general purpose computer into a special purpose computer for executing the processing shown herein. Certain of the functions and steps provided in the Figures may be implemented in hardware, software or a combination of both and may be performed in whole or in part within the programmed instructions of a computer.

In addition, an artisan understands and appreciates that a "processor" or "microprocessor" may be hardware in the claimed disclosure.

The processor 160 may also perform a designated function by executing a program stored in the memory 150. For example, the processor 160 may execute at least one of the client module 151 or the SDK 153 to perform the following operations for processing a voice input. In another example, the processor 160 may control the actions of the apps 155 through the SDK 153. The following operations described as operations of the client module 151 or the SDK 153 may be operations to be performed by the execution of the processor 160.

According to an example embodiment, the client module 151 may receive a user input. For example, the client module 151 may receive a voice signal corresponding to a user utterance detected by the microphone 120. Alternatively, the client module 151 may receive a touch input detected by the display module 140, which may be a touchscreen that includes a touch sensor. Similarly, the client module 151 may receive a text input detected by a keyboard or an on-screen keyboard. The client module 151 may also receive, as non-limiting examples, various types of user input sensed through an input module included in the user terminal 100 or an input module connected to the user terminal 100. The client module 151 may transmit the received user input to the intelligent server 200. The client module 151 may transmit state information of the user terminal 100 together with the received user input to the intelligent server 200. The state information may be, for example, execution state information of an app currently being executed by the user terminal 100.

The client module 151 may also receive a result corresponding to the received user input. For example, when the intelligent server 200 is capable of calculating the result corresponding to the received user input, the client module 151 may receive the result corresponding to the received user input. The client module 151 may display the received result on the display module 140, and output the received result in audio through the speaker 130.

The client module 151 may receive a plan corresponding to the received user input. The client module 151 may display, on the display module 140, execution results after executing a plurality of actions of an app according to the plan. For example, the client module 151 may sequentially display the execution results of the actions on the display module 140, and output the execution results in audio through the speaker 130. In another example, the user terminal 100 may display only the execution result of executing a portion of the actions (e.g., the execution result of the last action) on the display module 140, and output the execution result in audio through the speaker 130.

The client module 151 may receive a request for obtaining information necessary for calculating the result corresponding to the user input from the intelligent server 200. The client module 151 may transmit the necessary information to the intelligent server 200 in response to the request.

The client module 151 may transmit information on the execution results of the actions executed according to the plan to the intelligent server 200. The intelligent server 200 may verify that the received user input has been correctly processed using the information.

The client module 151 may include a speech recognition module. The client module 151 may recognize particular voice inputs for performing various specific functions through the speech recognition module. For example, the client module 151 may execute an intelligent app (e.g. an intelligent assistant app) for processing a voice input (e.g., Wake up!) to perform a particular action (e.g. waking up the user terminal 100).

According to an example embodiment, the intelligent server 200 may receive information related to a user voice input from the user terminal 100 through a communication network. The intelligent server 200 may change data related to the received voice input into text data. The intelligent server 200 may generate a plan for performing a task corresponding to the voice input based on the text data.

According to an example embodiment, the plan may be generated by an artificial intelligence (AI) system. The AI system may be a rule-based system or a neural network-based system (e.g., a feedforward neural network (FNN) or a recurrent neural network (RNN)). Alternatively, the AI system may be a combination thereof or another AI system. The plan may be selected from a set of predefined plans or may be generated in real time in response to a user request. For example, the AI system may select at least one plan from among the predefined plans.

According to an example embodiment, the intelligent server 200 may transmit the result of the generated plan to the user terminal 100 or transmit the generated plan to the user terminal 100. According to an example embodiment, the user terminal 100 may display the result according to the plan on the display module 140. The user terminal 100 may display the result of executing one or more actions according to the plan on the display module 140.

According to an example embodiment, the intelligent server 200 may include a front end 210, a natural language platform 220, a capsule database (DB) 230, an execution engine 240, an end user interface 250, a management platform 260, a big data platform 270, or an analytic platform 280.

According to an example embodiment, the front end 210 may receive a user input from the user terminal 100. The front end 210 may also transmit a response corresponding to the user input.

According to an example embodiment, the natural language platform 220 may include an automatic speech recognition (ASR) module 221, a natural language understanding (NLU) module 223, a planner module 225, a natural language generator (NLG) module 227, or a text-to-speech (TTS) module 229.

According to an example embodiment, the ASR module 221 may convert voice input received from the user terminal 100 into text data. According to an example embodiment, the NLU module 223 may understand the intention of the user using the text data of the voice input. For example, the NLU module 223 may understand the intention of the user by performing syntactic or semantic analysis on the user input which has been converted to text data. The NLU module 223 may understand the semantics of words extracted from the user input by using various linguistic features (e.g., grammatical element) of morphemes or phrases in the user input, and determine the intention of the user by matching the semantics of the word to one or more intentions.

According to an example embodiment, the planner module 225 may generate a plan using the intention and a parameter determined by the NLU module 223. The planner module 225 may determine a plurality of domains required to perform a task based on the determined intention. The planner module 225 may determine a plurality of actions included in each of the domains determined based on the intention. The planner module 225 may determine a parameter required to execute the determined actions or a resulting value output by the execution of the actions. The parameter and the resulting value may be defined as a concept of a designated form (or class). The plan may include a plurality of actions and a plurality of concepts determined by the user intention. The planner module 225 may determine a relationship between the actions and the concepts in a series of steps (or hierarchically). For example, the planner module 225 may determine an execution order of the actions determined based on the user intention, based on the concepts. In other words, the planner module 225 may determine the execution order of the actions based on the parameter required for the execution of the actions and results output by the execution of the actions. Accordingly, the planner module 225 may generate the plan including connection information (e.g., ontology) between the actions and the concepts. The planner module 225 may generate the plan using information stored in the capsule DB 230 that stores a set of relationships between concepts and actions.

According to an example embodiment, the NLG module 227 may change designated information from one text string to another. The resulting information may be in the form of a natural language utterance. According to an example embodiment, the TTS module 229 may change the information from the NLG module 227 from text to speech.

According to an example embodiment, all or some of the functions of the natural language platform 220 may also be implemented in the user terminal 100.

According to an example embodiment, the capsule DB 230 may store therein information about relationships between a plurality of concepts and a plurality of actions corresponding to a plurality of domains. According to an example embodiment, a capsule may include a plurality of action objects (or action information) and concept objects (or concept information) included in a plan. According to an example embodiment, the capsule DB 230 may store a plurality of capsules in the form of a concept action network (CAN). According to an example embodiment, the capsules may be stored in a function registry included in the capsule DB 230.

According to an example embodiment, the capsule DB 230 may include a strategy registry that stores strategy information necessary for determining a plan corresponding to a user input, for example, a voice input. The strategy information may include reference information for determining one plan when there are a plurality of plans corresponding to the user input. According to an example embodiment, the capsule DB 230 may include a follow-up registry that stores information on follow-up actions for suggesting a follow-up action to the user in a designated situation. The follow-up action may include, for example, a follow-up utterance. According to an example embodiment, the capsule DB 230 may include a layout registry that stores layout information of information output through the user terminal 100. According to an example embodiment, the capsule DB 230 may include a vocabulary registry that stores vocabulary information included in capsule information. According to an example embodiment, the capsule DB 230 may include a dialog registry that stores information on a dialog (or an interaction) with the user. The capsule DB 230 may update the stored objects through a developer tool. The developer tool may include, for example, a function editor for updating an action object or a concept object. The developer tool may include a vocabulary editor for updating a vocabulary. The developer tool may include a strategy editor for generating and registering a strategy for determining a plan. The developer tool may include a dialog editor for generating a dialog with the user. The developer tool may include a follow-up editor for activating a follow-up objective and editing a follow-up utterance that provides a hint. The follow-up objective may be determined based on a currently set objective, a preference of the user, or an environmental condition. According to an example embodiment, the capsule DB 230 may also be implemented in the user terminal 100.

According to an example embodiment, the execution engine 240 may calculate a result using a generated plan. The end user interface 250 may transmit the calculated result to the user terminal 100. Accordingly, the user terminal 100 may receive the result and provide the received result to the user. According to an example embodiment, the management platform 260 may manage information used by the intelligent server 200. According to an example embodiment, the big data platform 270 may collect data of the user. According to an example embodiment, the analytic platform 280 may manage a quality of service (QoS) of the intelligent server 200. For example, the analytic platform 280 may manage the components and processing rate (or efficiency) of the intelligent server 200.

According to an example embodiment, the service server 300 may provide various designated services (e.g., food ordering or hotel reservation) to the user terminal 100. The service server 300 may be a server operated by a third party. The service server 300 may provide the intelligent server 200 with information to be used for generating a plan corresponding to a received user input. The provided information may be stored in the capsule DB 230. In addition, the service server 300 may provide resulting information according to the plan to the intelligent server 200.

In the integrated intelligence system 10 described above, the user terminal 100 may provide various intelligent services to the user in response to a user input. The user input may include, for example, an input through a physical button, a touch input, or a voice input.

According to an example embodiment, the user terminal 100 may provide a speech recognition service through an intelligent app (or a speech recognition app) stored therein. In this case, the user terminal 100 may recognize a user utterance or a voice input received through the microphone 120, and provide a service corresponding to the recognized voice input to the user.

The user terminal 100 may perform a designated action alone or together with the intelligent server 200 and/or the service server 300 based on the received voice input. For example, the user terminal 100 may execute an app corresponding to the received voice input and perform the designated action through the executed app.

When the user terminal 100 provides the service together with the intelligent server 200 and/or the service server 300, the user terminal 100 may detect a user utterance using the microphone 120 and generate a signal (or voice data) corresponding to the detected user utterance. The user terminal 100 may transmit the voice data to the intelligent server 200 using the communication interface 110.

The intelligent server 200 may generate, as a response to the voice input received from the user terminal 100, a plan for performing a task corresponding to the voice input or a result of performing an action according to the plan. The plan may include, for example, a plurality of actions for performing the task corresponding to the voice input of the user, and a plurality of concepts related to the actions. The concepts may define parameters input to the execution of the actions or resulting values output by the execution of the actions. The plan may include connection information between the actions and the concepts.

The user terminal 100 may receive the response using the communication interface 110. The user terminal 100 may output a voice signal generated in the user terminal 100 to the outside using the speaker 130, or output an image generated in the user terminal 100 to the outside using the display module 140.

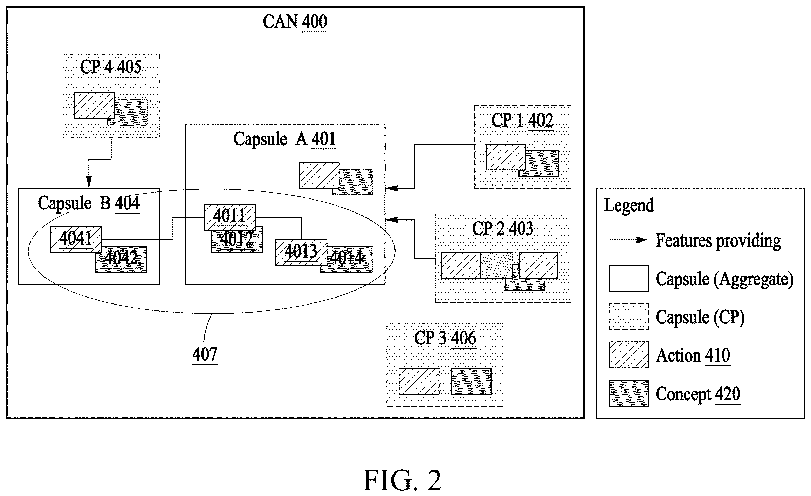

FIG. 2 is a diagram illustrating an example in which concept and action relationship information are stored in a DB according to an embodiment.

According to an example embodiment, a capsule DB (e.g., the capsule DB 230 of FIG. 1) of an intelligent server (e.g., the intelligent server 200 of FIG. 1) may store therein capsules in the form of a concept action network (CAN) 400. The capsule DB may store, in the form of the CAN 400, actions for processing a task corresponding to a voice input of the user and parameters necessary for the actions.

The capsule DB may store a plurality of capsules, for example, a capsule A 401 and a capsule B 404, respectively corresponding to a plurality of domains (e.g., applications). One capsule (e.g., the capsule A 401) may correspond to one domain (e.g., a location (geo) application). In addition, one capsule may correspond to at least one service provider (e.g., CP1 402 or CP 403) for performing a function of the domain related to the capsule. One capsule may include at least one action 410 and at least one concept 420 for performing the designated function.

According to an example embodiment, a natural language platform (e.g., the natural language platform 220 of FIG. 1) may generate a plan for performing a task corresponding to a received voice input using the capsules stored in the capsule DB. For example, a planner module (e.g., the planner module 225 of FIG. 1) of the natural language platform may generate the plan using the capsules stored in the capsule DB. For example, the planner module may generate a plan 407 using actions 4011 and 4013 and concepts 4012 and 4014 of the capsule A 401 and using an action 4041 and a concept 4042 of the capsule B 404.

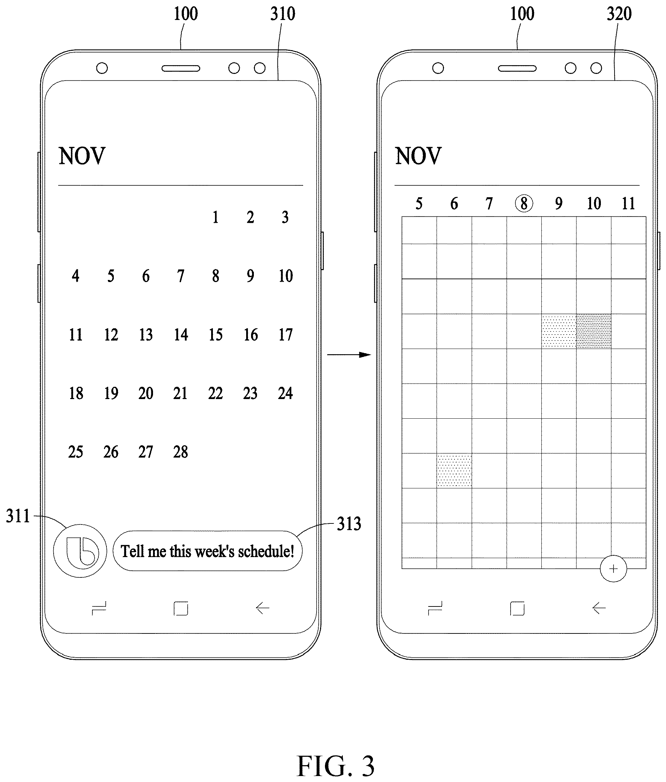

FIG. 3 is a diagram illustrating example screens showing a user terminal processing a received voice input through an intelligent app according to an embodiment.

Referring to FIG. 3, a user terminal 100 may execute an intelligent app to process a user input through an intelligent server (e.g., the intelligent server 200 of FIG. 1).

According to an example embodiment, on a first screen 310, when a designated voice input (e.g., Wake up!) is recognized or an input through a hardware key (e.g., a dedicated hardware key) is received, the user terminal 100 may execute the intelligent app for processing the voice input. The user terminal 100 may execute the intelligent app, for example, while a scheduling app is being executed. The user terminal 100 may display an object (e.g., an icon) 311 corresponding to the intelligent app on a display (e.g., the display module 140 of FIG. 1). According to an example embodiment, the user terminal 100 may receive a voice input made by a user utterance. For example, the user terminal 100 may receive a voice input "Tell me this week's schedule!" According to an example embodiment, the user terminal 100 may display a user interface (UI) 313 (e.g., an input window) of the intelligent app in which text data of the received voice input is displayed.

According to an example embodiment, on a second screen 320, the user terminal 100 may display a result corresponding to the received voice input on the display. For example, the user terminal 100 may receive a plan corresponding to a received user input and display, on the display, "this week's schedule" according to the plan.

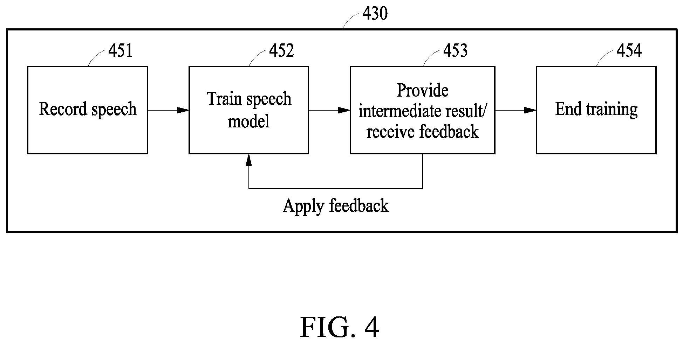

FIG. 4 is a diagram illustrating an example electronic device configured to generate a personalized text-to-speech (P-TTS) model according to an embodiment.

Referring to FIG. 4, according to an embodiment, an electronic device 430 (e.g., the user terminal 100 of FIG. 1) may generate a P-TTS model corresponding to a user by training a speech model based on recorded data in which user utterances are recorded. The P-TTS model may be a model that generates a sound source in the voice of a target speaker (e.g., the user).

According to an embodiment, the electronic device 430 may operate a microphone (e.g., the microphone 120 of FIG. 1) to record the user utterance in operation 451. The electronic device 430 may provide text (e.g. sample text for the user to read out loud) to the user through a display module (e.g., the display module 140 of FIG. 1) and receive the user utterance corresponding to the text through the microphone to record the user utterance.

According to an embodiment, the electronic device 430 may train a speech model based on training data in which a sound source recorded for generating the P-TTS model and a text corresponding to the recorded sound source are matched in operation 452.

According to an embodiment, the electronic device 430 may provide an intermediate result to the user during the training of the speech model, and receive feedback of the user on the intermediate result in operation 453. For example, a speech model trained based on a portion of the training data may be stored as an intermediate model, and an intermediate result generated using the intermediate model may be provided to the user. Based on the feedback of the user on the intermediate result, the training of the speech model may be ended, or the feedback of the user may be applied to operation 452 of training the speech model.

According to an embodiment, when user feedback for ending the training is received, the electronic device 430 may end the training of the speech model and generate the P-TTS model in operation 454.

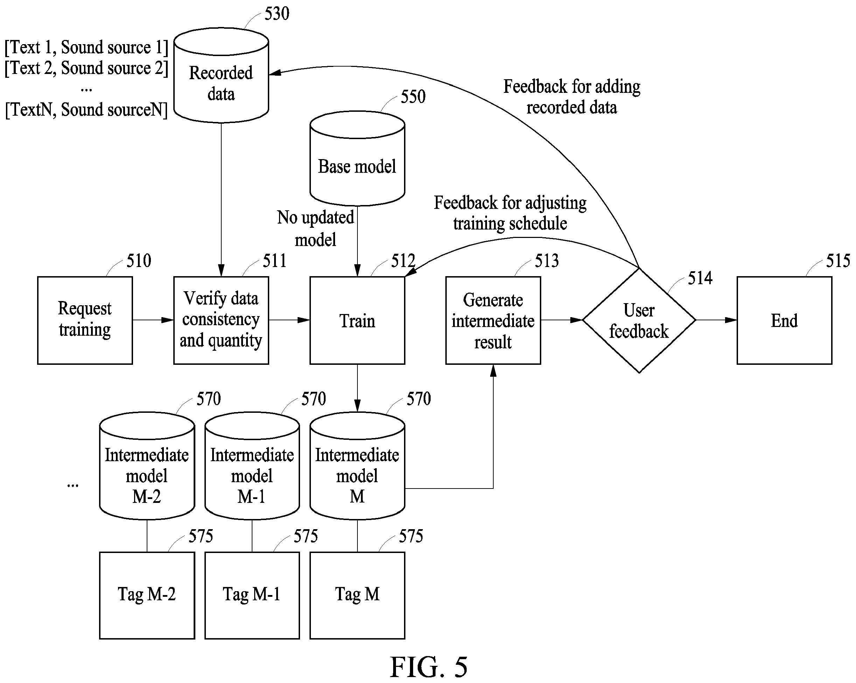

FIG. 5 is a diagram illustrating an example operation of generating a P-TTS model by an electronic device according to an embodiment.

Referring to FIG. 5, according to an embodiment, an electronic device (e.g., the electronic device 430 of FIG. 4) may perform a P-TTS model generating operation in response to a request for training from the user in operation 510.

According to an embodiment, the electronic device 430 may verify data consistency and quantity of recorded data 530 in operation 511. The recording data 530 may include data in which texts (e.g., texts 1 through N in which N is a natural number) and sound sources (e.g., sound sources 1 through N) in which user utterances respectively corresponding to the texts are recorded are matched. A speech model training operation may be performed only when the number of sets of data of the recorded data 530 from which the data consistency is verified is greater than or equal to a preset number.

According to an embodiment, the electronic device 430 may train a speech model using a base model 550 in operation 512.

According to an embodiment, the base model 550 may be a speech synthesis model having the architecture of a neural network with a plurality of layers and is trained using a deep learning algorithm. The neural network may include, but is not limited to, a convolutional neural network (CNN), a deep neural network (DNN), a recurrent neural network (RNN), or a bidirectional recurrent deep neural network (BRDNN). The base model 550 may be a speech synthesis model trained in advance using a large amount of data. However, this large amount of data may be from an entire population and thus the base model is not specific to the particular user here. The base model 550 may be stored in the electronic device 430 or may be received from an external device (e.g., the intelligent server 200 of FIG. 1) in response to a request from the electronic device 430.

According to an embodiment, the electronic device 430 may use different base models according to age and/or gender of the user. The base model 550 may include speech synthesis models trained based on different training data according to different age and/or gender groups.

According to an embodiment, the electronic device 430 may store a speech model being trained as an intermediate model 570 in operation 512. The intermediate model 570 may be a speech model that has been trained with only a portion of the training data. A different intermediate model 570 may be stored every time training is performed with a particular preset number of data sets. The intermediate model 570 may be stored along with a tag 575 indicating a characteristic of the corresponding model.

According to an embodiment, the electronic device 430 may generate an intermediate result based on the intermediate model 570 in operation 513. The intermediate result may include a sound source corresponding to a text generated using the intermediate model 570, and may include a numerical value indicating the difference between the generated sound source and the sound source recorded from the same text from the user.

According to an embodiment, the electronic device 430 may provide the intermediate result to the user and receive feedback of the user on the intermediate result in operation 514. The user feedback may include feedback for adjusting a training schedule, feedback for adding recorded data, and/or feedback for ending training. Based on the user feedback, the electronic device 430 may adjust the training schedule, request additional recording, or end the training.

According to an embodiment, the electronic device 430 may generate a P-TTS model by ending the training of the speech model in response to the feedback for ending the training in operation 515.

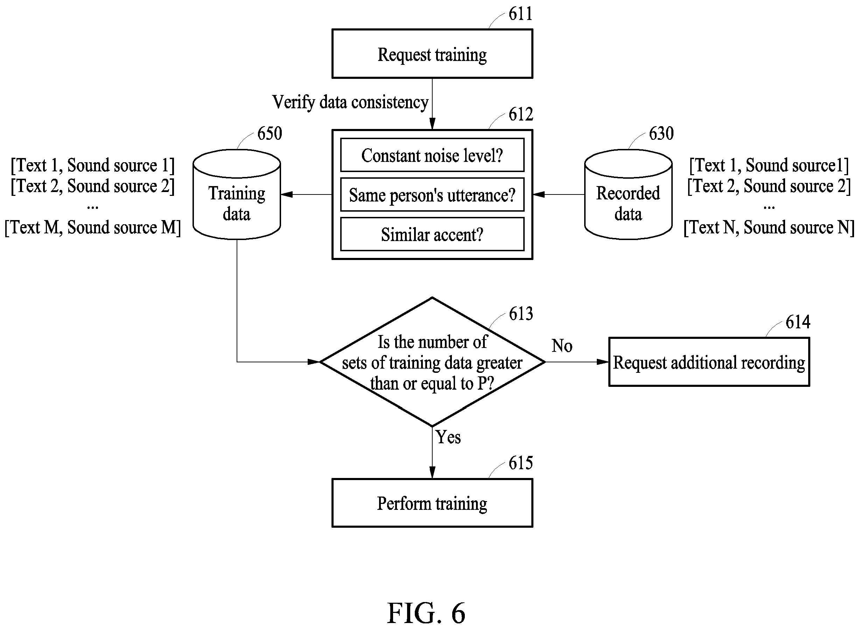

FIG. 6 is a diagram illustrating an example operation of verifying data consistency and quantity by an electronic device according to an embodiment.

Referring to FIG. 6, according to an embodiment, an electronic device (e.g., the electronic device 430 of FIG. 4) may perform a data consistency and quantity verification operation in response to a request for training in operation 611.

According to an embodiment, the electronic device 430 may verify data consistency of recorded data 630 (e.g., the recorded data 530 of FIG. 5) in operation 612. Such a data consistency verifying operation may be performed to verify whether noise of sound sources (e.g., sound sources 1 through N) included in the recorded data 630 are at a constant level, whether the sound sources (e.g., sound sources 1 through N) are uttered by the same person, and/or whether accents of the sound sources (e.g., sound sources 1 through N) are similar to each other. Data in the recorded data 630 from which the data consistency is verified may be extracted as training data 650. The training data 650 may include sound sources (e.g., sound sources 1 through M in which M is a natural number) in the recorded data 630 from which the consistency is verified and texts (e.g., texts 1 through M) respectively corresponding to the sound sources. In this case, M is smaller than or equal to N.

According to an embodiment, the electronic device 430 may verify whether the number of sets (e.g. M) of the training data 650 is greater than or equal to a threshold value in operation 613. When the number of the sets of the training data 650 is less than P (P is a natural number), the electronic device 430 may request the user for additional recording in operation 614. When the number of the sets of the training data 650 is greater than or equal to P (P is a natural number), the electronic device 430 may perform training of a speech model using the training data 650 in operation 615. The electronic device 430 may extract the training data 650 by performing operation 612 to verify again data consistency of the recorded data 630 to which an additionally recorded sound source is added, and perform operation 613 to verify again the quantity of the training data 650.

According to an embodiment, even when the number of the sets of the training data 650 is less than P, the electronic device 430 may perform the training of the speech model in response to a request and/or approval from the user. For example, when a prior consent for sound quality degradation is obtained from the user for sound source generated by the speech model trained based on less than P sets of the training data 650, such that there is an in sufficient quantity of data to train the speech model, the operation of training the speech model may be performed.

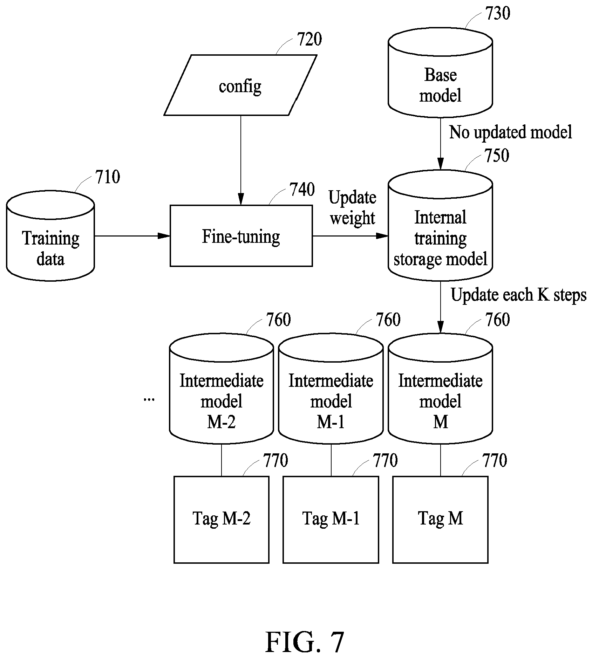

FIG. 7 is a diagram illustrating an example operation of training a speech model by an electronic device according to an embodiment.

Referring to FIG. 7, according to an embodiment, an electronic device (e.g., the electronic device 430 of FIG. 4) may perform fine-tuning using training data 710 (e.g., the training data 650 of FIG. 6) based on a configuration parameter (or a config parameter as illustrated) 720 associated with a training schedule, in operation 740. According to an embodiment, the electronic device 430 may perform the fine-tuning using a base model 730 (e.g., the base model 550 of FIG. 5). The electronic device 430 may update a weight of the base model 730 by calculating a relationship between a parameter (e.g., a spectral parameter) extracted from a sound source included in the training data 710 and a parameter generated through the base model 730 using a text corresponding to the sound source, and store the updated weight in an internal training storage model 750. The electronic device 430 may continuously update the weight of the internal training storage model 750 using the training data 710.

According to an embodiment, the electronic device 430 may store the internal training storage model 750 as an intermediate model 760 (e.g., the intermediate model 570 of FIG. 5) at various preset training steps (e.g., each time weight updating is performed K times, in which K is a natural number). The intermediate model 760 may be stored every time the weight of the internal training storage model 750 is updated with K sets of data in the training data 710.

According to an embodiment, the intermediate model 760 may be stored along with a tag 770 (e.g., the tag 575 of FIG. 5). The tag 770 may be a numerical value indicating the difference between a sound source generated through the intermediate model 760 and a recorded sound source. The tag 770 may indicate the spectral distance between the generated sound source and the recorded sound source. The spectral distance may be a Euclidean distance calculated by extracting a mel-cepstrum from the two sound sources and aligning frames through dynamic time warping.

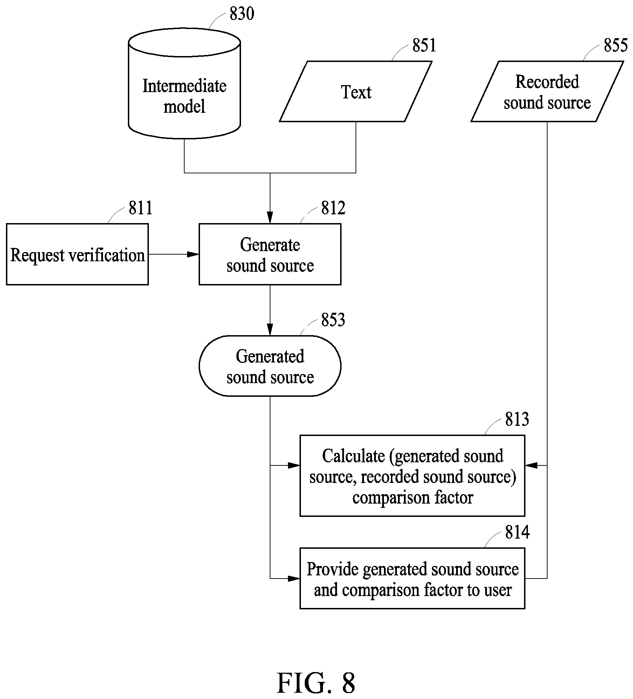

FIG. 8 is a diagram illustrating an example operation of providing an intermediate result by an electronic device according to an embodiment.

Referring to FIG. 8, according to an embodiment, an electronic device (e.g., the electronic device 430 of FIG. 4) may provide an intermediate result to the user in response to a request for verifying the intermediate result in operation 811. The request for the verifying may be made from the user or generated at a preset point in time (e.g., when the training reaches a preset step).

According to an embodiment, the electronic device 430 may generate a sound source 853 corresponding to a text 851 using an intermediate model 830 (e.g., the intermediate model 570 of FIG. 5) in operation 812. The text 851 may be a text corresponding to a recorded sound source 855 (e.g., a sound source included in the training data 650 of FIG. 6).

According to an embodiment, the electronic device 430 may calculate a comparison factor between the generated sound source 853 and the recorded sound source 855 in operation 813. The comparison factor may indicate the spectral distance between the generated sound source 853 and the recorded sound source 855. The spectral distance may be a Euclidean distance calculated by extracting a mel-cepstrum from the two sound sources and aligning frames through dynamic time warping. The decrease in the spectral distance may indirectly indicate a decrease in the difference between the generated sound source 853 and the recorded sound source 855. Thus, when the comparison factor decreases as training progresses the user may verify that a speech model approaches the tone or accent of the target speaker. However, when the comparison factor no longer decreases despite the progress of the training, the sound source generated by the speech model trained up to that point may correspond to the best the speech model can simulate the target speaker. Thus, in such a case, it may be a factor that ends the training.

According to an embodiment, the electronic device 430 may provide the generated sound source 853 and/or the comparison factor as an intermediate result to the user in operation 814. As the electronic device 430 provides the generated sound source 853 and/or the comparison factor to the user, the electronic device 430 may receive feedback from the user.

According to an embodiment, the text 851 may be text that does not correspond to the recorded sound source 855. In this case, the electronic device 430 may provide a tag (e.g., the tag 770 of FIG. 7) stored along with the intermediate model 830 to the user, without calculating the comparison factor.

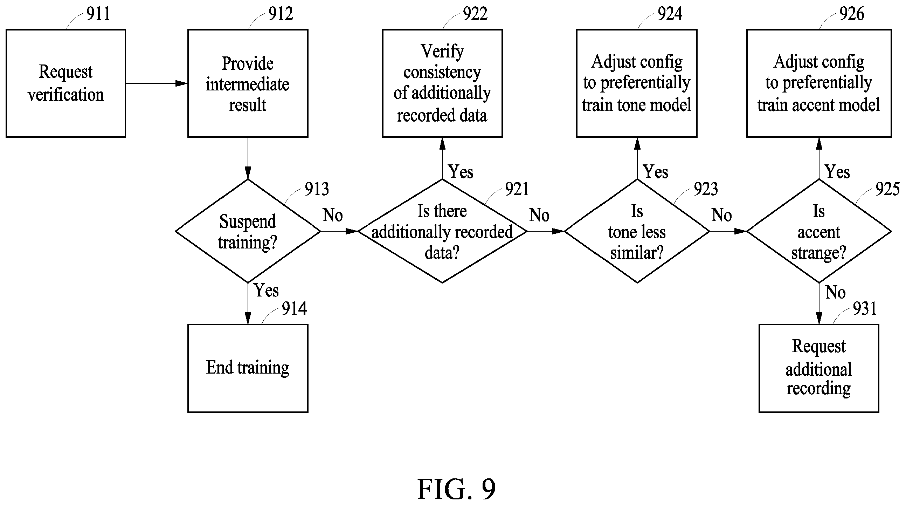

FIG. 9 is a diagram illustrating an example operation of obtaining user feedback by an electronic device according to an embodiment.

Referring to FIG. 9, according to an embodiment, an electronic device (e.g., the electronic device 430 of FIG. 4) may receive feedback of the user in response to a request for verification in operation 911. The electronic device 430 may generate an intermediate result in response to the request and provide the intermediate result to the user in operation 912.

According to an embodiment, the electronic device 430 may allow the user receiving the intermediate result to verify whether to suspend training in operation 913. When receiving feedback for suspending the training from the user, the electronic device 430 may end the training of a speech model in operation 914.

According to an embodiment, when receiving feedback for continuing the training from the user, the electronic device 430 may allow the user to verify whether there is additionally recorded data to be provided for the training in operation 921. When receiving feedback indicating the presence of the additionally recorded data from the user, the electronic device 430 may verify consistency of the additionally recorded data in operation 922, and continue the training by adding, the data in the additionally recorded data from which the consistency is verified to the training data (e.g., the training data 710 of FIG. 7).

According to an embodiment, when receiving feedback indicating the absence of the additionally recorded data from the user, the electronic device 430 may allow the user to verify whether the tone and the accent of a sound source (e.g., the generated sound source 853 of FIG. 8) generated as an intermediate result are similar to the tone and the accent of a target speaker in operations 923 and 925. Although it is illustrated in FIG. 9 that the electronic device 430 verifies the similarity in tone in operation 923 and then verifies the similarity in accent in operation 925, examples are not limited thereto. For example, the electronic device 430 may also verify the similarity in accent in operation 925 and then verify the similarity in tone in operation 923.

According to an embodiment, the electronic device 430 may adjust a configuration parameter (e.g., the configuration parameter 720 of FIG. 7) associated with a training schedule based on feedback of the user on the similarity in tone and accent in operations 924 and 926.

According to an embodiment, the configuration parameter may include a parameter for the learning rate of fine-tuning operations. The electronic device 430 may reduce the amount of change of a speech model close to local maxima by reducing the learning rate, and may thereby train the speech model to approach an optimal point.

According to an embodiment, when the speech model is a two-stage model, the configuration parameter may include a parameter associated with a ratio of training at each stage. The speech model may include a tone model associated with a tone and an accent model associated with an accent, and the ratio of training the tone model or the accent model may be adjusted based on the configuration parameter.

According to an embodiment, when receiving, from the user, feedback that the tone of the generated sound source (e.g., the generated sound source 853) is not similar, the electronic device 430 may adjust the configuration parameter to preferentially train the tone model in operation 924. When receiving, from the user, feedback that the accent of the generated sound source (e.g., the generated sound source 853) is not similar, the electronic device 430 may adjust the configuration parameter to preferentially train the accent model in operation 926.

According to an embodiment, when receiving, from the user, feedback that the tone and the accent of the generated sound source are similar, the electronic device 430 may request the user for additional recording in operation 931.

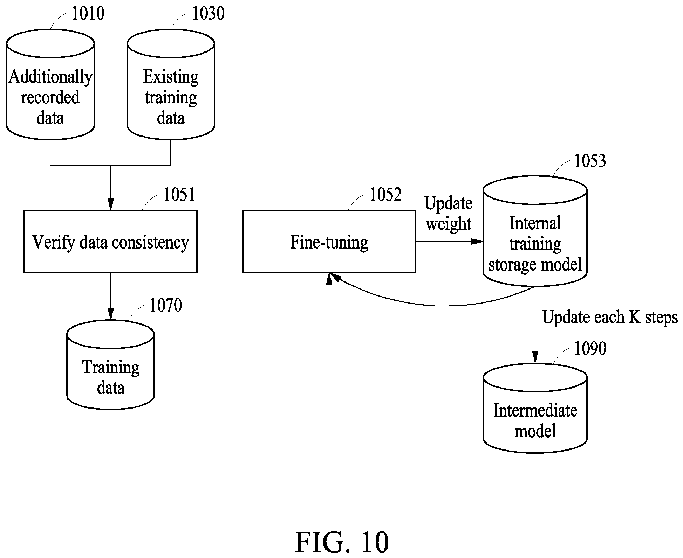

FIG. 10 is a diagram illustrating an example operation of training a speech model based on additionally recorded data by an electronic device according to an embodiment.

Referring to FIG. 10, according to an embodiment, when there is additionally recorded data 1010, an electronic device (e.g., the electronic device 430 of FIG. 4) may verify data consistency based on the additionally recorded data 1010 and existing training data 1030 (e.g., the training data 710 of FIG. 7) in operation 1051. When the additionally recorded data 1010 is less consistent with the existing training data 1030, it may have a negative effect on a training or learning result. Thus, the electronic device 430 may verify whether the additionally recorded data 1010 is similar to and consistent with the existing training data 1030.

According to an embodiment, the electronic device 430 may verify the consistency between the additionally recorded data 1010 and the existing training data 1030 based on a signal-to-noise ratio (SNR). When the difference between an SNR of the additionally recorded data 1010 and an SNR of the existing training data 1030 is less than or equal to a threshold value, the electronic device 430 may determine the additionally recorded data 1010 and the existing training data 1030 to be consistent.

According to an embodiment, the electronic device 430 may verify the consistency between the additionally recorded data 1010 and the existing training data 1030 based on a volume level (or loudness). When the difference between a loudness of the additionally recorded data 1010 and a loudness of the existing training data 1030 is less than or equal to a threshold value, the electronic device 430 may determine the additionally recorded data 1010 and the existing training data 1030 to be consistent.

According to an embodiment, the electronic device 430 may verify the consistency between the additionally recorded data 1010 and the existing training data 1030 based on a speaking speed. When the difference between a speaking speed of the additionally recorded data 1010 and a speaking speed of the existing training data 1030 is less than or equal to a threshold value, the electronic device 430 may determine the additionally recorded data 1010 and the existing training data 1030 to be consistent.

According to an embodiment, the threshold value of the difference in SNR, the threshold value of the difference in volume level, and/or the threshold value of the difference in speaking speed used to verify the consistency of the additionally recorded data 1010 and the existing training data 1030 may be adjusted to appropriate values.

According to an embodiment, the electronic device 430 may perform fine-tuning based on training data 1070 in which the existing training data 1030 and the additionally recorded data 1010 from which the consistency is verified are combined, in operation 1052.

According to an embodiment, the electronic device 430 may store an intermediate model 1090 after a particular interval of preset steps of the fine-tuning operation are performed and may update the weight of an internal training storage model 1053.

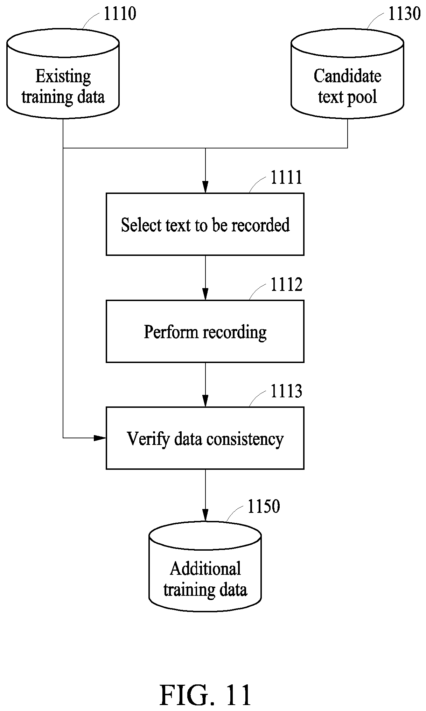

FIG. 11 is a diagram illustrating an example operation of collecting additionally recorded data by an electronic device according to an embodiment.

Referring to FIG. 11, according to an embodiment, when performing additional recording, an electronic device (e.g., the electronic device 430 of FIG. 4) may select text to be recorded from a candidate text pool 1130 based on existing training data 1110 in operation 1111.

According to an embodiment, the candidate text pool 1130 may include sets of sentences selected based on phonetic balance, or may include news sentences or text sentences extracted from speeches input from a particular user through an app such as a call app.

According to an embodiment, the electronic device 430 may extract phonetic sequences from the existing training data 1110 and select text to be recorded based on the distribution of the phonetic sequences. The text to be recorded may be selected to include utterances that are relatively insufficiently present in the distribution of the phonetic sequences extracted from the existing training data 1110.

According to an embodiment, the electronic device 430 may record speech (or utterance) of the user corresponding to the selected text in operation 1112, and verify data consistency of the additionally recorded data in operation 1113.

According to an embodiment, the electronic device 430 may obtain additional training data 1150 by adding, to the existing training data 1110, data of the additionally recorded data from which the consistency is verified. The electronic device 430 may train a speech model using the additional training data 1150.

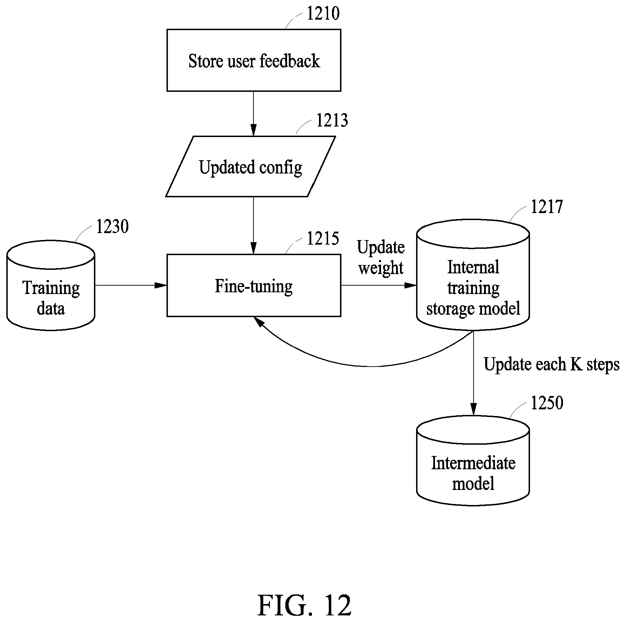

FIG. 12 is a diagram illustrating an example operation of changing a training schedule by an electronic device according to an embodiment.

Referring to FIG. 12, according to an embodiment, an electronic device (e.g., the electronic device 430 of FIG. 4) may store feedback received from the user in operation 1210, update a configuration parameter (e.g., the configuration parameter 720 of FIG. 7) based on the feedback.

According to an embodiment, the electronic device 430 may perform fine-tuning 1215 using training data 1230 based on an updated configuration parameter 1213. A schedule of the fine-tuning 1215 performed by the electronic device 430 may be changed according to the updated configuration parameter 1213.

According to an embodiment, the updated configuration parameter 1213 may be used to adjust a learning rate, a ratio of training a tone model, and/or a ratio of training an accent model. The electronic device 430 may perform the fine-tuning 1215 based on the training schedule adjusted based on the updated configuration parameter 1213.

According to an embodiment, the electronic device 430 may store an intermediate model 1250 after a particular interval of preset steps of the fine-tuning operation are performed and may update the weight of an internal training storage model 1217.

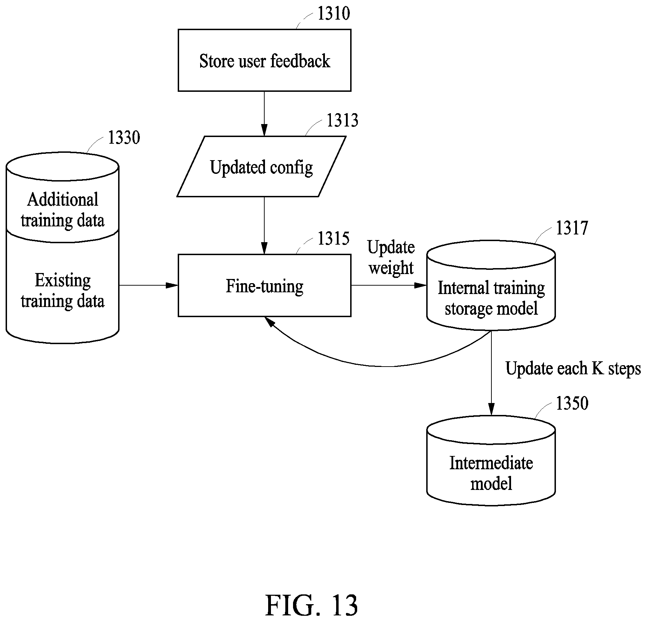

FIG. 13 is a diagram illustrating an example operation of training based on user feedback by an electronic device according to an embodiment.

Referring to FIG. 13, according to an embodiment, an electronic device (e.g., the electronic device 430 of FIG. 4) may store feedback of the user based on an intermediate result in operation 1310, and train a speech model based on the feedback.

According to an embodiment, the electronic device 430 may perform fine-tuning based on a training schedule that is adjusted based on an updated configuration parameter 1313 (e.g., the updated configuration parameter 1213 of FIG. 12), using training data 1330 in which additional training data (e.g., the additional training data 1150 of FIG. 11) obtained through additional recording is combined with existing training data, in operation 1315.

According to an embodiment, the electronic device 430 may store an intermediate model 1350 after a particular interval of preset steps of the fine-tuning operation are performed and may update the weight of an internal training storage model 1317.

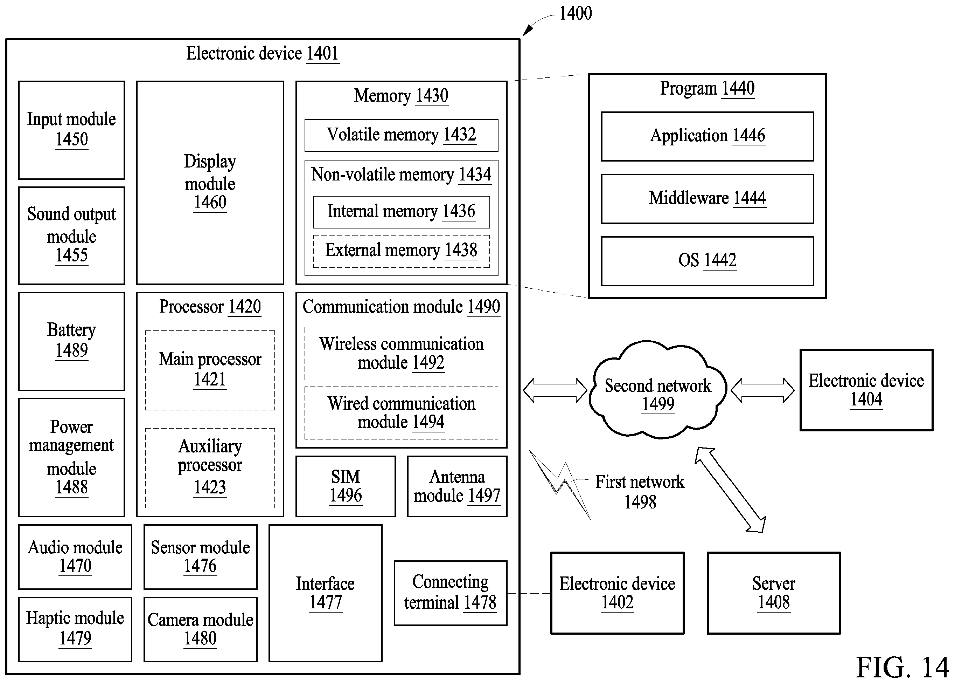

FIG. 14 is a block diagram illustrating an example electronic device in a network environment according to an embodiment.

Referring to FIG. 14, an electronic device 1401 (e.g., the user terminal 100 of FIG. 1 and the electronic device 430 of FIG. 4) in a network environment 1400 may communicate with an electronic device 1402 via a first network 1498 (e.g., a short-range wireless communication network), or communicate with at least one of an electronic device 1404 and a server 1408 via a second network 1499 (e.g., a long-range wireless communication network). According to an example embodiment, the electronic device 1401 may communicate with the electronic device 1404 via the server 1408. According to an example embodiment, the electronic device 1401 may include a processor 1420, a memory 1430, an input module 1450, a sound output module 1455, a display module 1460, an audio module 1470, and a sensor module 1476, an interface 1477, a connecting terminal 1478, a haptic module 1479, a camera module 1480, a power management module 1488, a battery 1489, a communication module 1490, a subscriber identification module (SIM) 1496, or an antenna module 1497. In some example embodiments, at least one (e.g., the connecting terminal 1478) of the above components may be omitted from the electronic device 1401, or one or more other components may be added in the electronic device 1401. In some example embodiments, some (e.g., the sensor module 1476, the camera module 1480, or the antenna module 1497) of the components may be integrated as a single component (e.g., the display module 1460).

The processor 1420 may execute, for example, software (e.g., a program 1440) to control at least one other component (e.g., a hardware or software component) of the electronic device 1401 connected to the processor 1420, and may perform various data processing or computation. According to an example embodiment, as at least a part of data processing or computation, the processor 1420 may store a command or data received from another component (e.g., the sensor module 1476 or the communication module 1490) in a volatile memory 1432, process the command or data stored in the volatile memory 1432, and store resulting data in a non-volatile memory 1434. According to an example embodiment, the processor 1420 may include a main processor 1421 (e.g., a central processing unit (CPU) or an application processor (AP)) or an auxiliary processor 1423 (e.g., a graphics processing unit (GPU), a neural processing unit (NPU), an image signal processor (ISP), a sensor hub processor, or a communication processor (CP)) that is operable independently of, or in conjunction with, the main processor 1421. For example, when the electronic device 1401 includes the main processor 1421 and the auxiliary processor 1423, the auxiliary processor 1423 may be adapted to consume less power than the main processor 1421 or to be specific to a specified function. The auxiliary processor 1423 may be implemented separately from the main processor 1421 or as a part of the main processor 1421.

The auxiliary processor 1423 may control at least some of functions or states related to at least one (e.g., the display device 1460, the sensor module 1476, or the communication module 1490) of the components of the electronic device 1401, instead of the main processor 1421 while the main processor 1421 is in an inactive (e.g., sleep) state or along with the main processor 1421 while the main processor 1421 is an active state (e.g., executing an application). According to an example embodiment, the auxiliary processor 1423 (e.g., an ISP or a CP) may be implemented as a portion of another component (e.g., the camera module 1480 or the communication module 1490) that is functionally related to the auxiliary processor 1423. According to an example embodiment, the auxiliary processor 1423 (e.g., an NPU) may include a hardware structure specified for AI model processing. An AI model may be generated by machine learning. Such learning may be performed by, for example, the electronic device 1401 in which the AI model is performed, or performed via a separate server (e.g., the server 1408). Learning algorithms may include, but are not limited to, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 1430 may store various data used by at least one component (e.g., the processor 1420 or the sensor module 1476) of the electronic device 1401. The data may include, for example, software (e.g., the program 1440) and input data or output data for a command related thereto. The memory 1430 may include the volatile memory 1432 or the non-volatile memory 1434. The non-volatile memory 1434 may include an internal memory 1436 and an external memory 1438.

The program 1440 may be stored as software in the memory 1430, and may include, for example, an operating system (OS) 1442, middleware 1444, or an application 1446.

The input module 1450 may receive a command or data to be used by another component (e.g., the processor 1420) of the electronic device 1401, from the outside (e.g., a user) of the electronic device 1401. The input module 1450 may include, for example, a microphone, a mouse, a keyboard, a key (e.g., a button), or a digital pen (e.g., a stylus pen).

The sound output module 1455 may output a sound signal to the outside of the electronic device 1401. The sound output module 1455 may include, for example, a speaker or a receiver. The speaker may be used for general purposes, such as playing multimedia or playing records. The receiver may be used to receive an incoming call. According to an example embodiment, the receiver may be implemented separately from the speaker or as a part of the speaker.

The display module 1460 may visually provide information to the outside (e.g., a user) of the electronic device 1401. The display module 1460 may include, for example, a display, a hologram device, a projector, or a control circuitry to control a corresponding one of the display, the hologram device, and the projector. According to an example embodiment, the display module 1460 may include a touch sensor adapted to sense a touch, or a pressure sensor adapted to measure an intensity of a force incurred by the touch.

The audio module 1470 may convert a sound into an electric signal or vice versa. According to an example embodiment, the audio module 1470 may obtain the sound via the input module 1450 or output the sound via the sound output module 1455 or an external electronic device (e.g., the electronic device 1402 such as a speaker or a headphone) directly or wirelessly connected to the electronic device 1401.

The sensor module 1476 may detect an operational state (e.g., power or temperature) of the electronic device 1401 or an environmental state (e.g., a state of a user) external to the electronic device 1401, and generate an electric signal or data value corresponding to the detected state. According to an example embodiment, the sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with an external electronic device (e.g., the electronic device 1402) directly (e.g., wiredly) or wirelessly. According to an example embodiment, the interface 1477 may include, for example, a high-definition multimedia interface (HDMI), a universal serial bus (USB) interface, a secure digital (SD) card interface, or an audio interface.

The connecting terminal 1478 may include a connector via which the electronic device 1401 may be physically connected to an external electronic device (e.g., the electronic device 102). According to an example embodiment, the connecting terminal 1478 may include, for example, an HDMI connector, a USB connector, an SD card connector, or an audio connector (e.g., a headphone connector).

The haptic module 1479 may convert an electric signal into a mechanical stimulus (e.g., a vibration or a movement) or an electrical stimulus which may be recognized by a user via his or her tactile sensation or kinesthetic sensation. According to an example embodiment, the haptic module 1479 may include, for example, a motor, a piezoelectric element, or an electric stimulator.

The camera module 1480 may capture a still image and moving images. According to an example embodiment, the camera module 1480 may include one or more lenses, image sensors, ISPs, or flashes.

The power management module 1488 may manage power supplied to the electronic device 1401. According to an example embodiment, the power management module 1488 may be implemented as, for example, at least a part of a power management integrated circuit (PMIC).

The battery 1489 may supply power to at least one component of the electronic device 1401. According to an example embodiment, the battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and an external electronic device (e.g., the electronic device 1402, the electronic device 1404, or the server 1408) and performing communication via the established communication channel. The communication module 1490 may include one or more communication processors that are operable independently of the processor 1420 (e.g., an AP) and that support direct (e.g., wired) communication or wireless communication. According to an example embodiment, the communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device 1404 via the first network 1498 (e.g., a short-range communication network, such as Bluetooth^{™}, wireless-fidelity (Wi-Fi) direct, or infrared data association (IrDA)) or the second network 1499 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multi chips) separate from each other. The wireless communication module 1492 may identify and authenticate the electronic device 1401 in a communication network, such as the first network 1498 or the second network 1499, using subscriber information (e.g., international mobile subscriber identity (IMSI)) stored in the SIM 1496.

The wireless communication module 1492 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 1492 may support a high-frequency band (e.g., a mmWave band) to achieve, e.g., a high data transmission rate. The wireless communication module 1492 may support various technologies for securing performance on a high-frequency band, such as, e.g., beamforming, massive multiple-input and multiple-output (MIMO), full dimensional MIMO (FD-MIMO), an array antenna, analog beamforming, or a large scale antenna. The wireless communication module 1492 may support various requirements specified in the electronic device 1401, an external electronic device (e.g., the electronic device 1404), or a network system (e.g., the second network 1499). According to an example embodiment, the wireless communication module 1492 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1497 may transmit or receive a signal or power to or from the outside (e.g., an external electronic device) of the electronic device 1401. According to an example embodiment, the antenna module 1497 may include an antenna including a radiating element including a conductive material or a conductive pattern formed in or on a substrate (e.g., a printed circuit board (PCB)). According to an example embodiment, the antenna module 1497 may include a plurality of antennas (e.g., array antennas). In such a case, at least one antenna appropriate for a communication scheme used in a communication network, such as the first network 1498 or the second network 1499, may be selected by, for example, the communication module 1490 from the plurality of antennas. The signal or the power may be transmitted or received between the communication module 1490 and the external electronic device via the at least one selected antenna. According to an example embodiment, another component (e.g., a radio frequency integrated circuit (RFIC)) other than the radiating element may be additionally formed as a part of the antenna module 1497.

According to certain example embodiments, the antenna module 1497 may form a mmWave antenna module. According to an example embodiment, the mmWave antenna module may include a PCB, an RFIC disposed on a first surface (e.g., a bottom surface) of the PCB or adjacent to the first surface and capable of supporting a designated high-frequency band (e.g., the mmWave band), and a plurality of antennas (e.g., array antennas) disposed on a second surface (e.g., a top or a side surface) of the PCB or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general-purpose input and output (GPIO), serial peripheral interface (SPI), or mobile industry processor interface (MIPI)).

According to an example embodiment, commands or data may be transmitted or received between the electronic device 1401 and the external electronic device 1404 via the server 1408 coupled with the second network 1499. Each of the external electronic devices 1402 and 1404 may be a device of the same type as or a different type from the electronic device 1401. According to an example embodiment, all or some of operations to be executed by the electronic device 1401 may be executed at one or more of the external electronic devices 1402, 1404, and 1408. For example, if the electronic device 1401 needs to perform a function or a service automatically, or in response to a request from a user or another device, the electronic device 1401, instead of, or in addition to, executing the function or the service, may request one or more external electronic devices to perform at least a part of the function or the service. The one or more external electronic devices receiving the request may perform the at least part of the function or the service requested, or an additional function or an additional service related to the request, and may transfer an outcome of the performing to the electronic device 1401. The electronic device 1401 may provide the outcome, with or without further processing of the outcome, as at least a part of a reply to the request. To that end, a cloud computing, distributed computing, mobile edge computing (MEC), or client-server computing technology may be used, for example. The electronic device 1401 may provide ultra-low latency services using, e.g., distributed computing or mobile edge computing. In an example embodiment, the external electronic device 1404 may include an Internet-of-things (IoT) device. The server 1408 may be an intelligent server using machine learning and/or a neural network. According to an example embodiment, the external electronic device 1404 or the server 1408 may be included in the second network 1499. The electronic device 1401 may be applied to intelligent services (e.g., smart home, smart city, smart car, or healthcare) based on 5G communication technology or IoT-related technology.

An electronic device according to certain embodiments of the present disclosure may be a device of various types. The electronic device may include, for example, a portable communication device (e.g., a smartphone, etc.), a computing device, a portable multimedia device, a portable medical device, a camera, a wearable device, or a home appliance. However, the electronic device is not limited to the foregoing examples.

It should be construed that various example embodiments of the present disclosure and the terms used therein are not intended to limit the technological features set forth herein to some particular embodiments but include various changes, equivalents, or replacements of the example embodiments. In connection with the description of the drawings, like reference numerals may be used for similar or related components. It should be understood that a singular form of a noun corresponding to an item may include one or more of the things, unless the relevant context clearly indicates otherwise. As used herein, "A or B," "at least one of A and B," "at least one of A or B," "A, B, or C," "at least one of A, B, and C," and "A, B, or C," each of which may include any one of the items listed together in the corresponding one of the phrases, or all possible combinations thereof. Although terms of "first" or "second" are used to explain various components, the components are not limited to the terms. These terms should be used only to distinguish one component from another component. For example, a "first" component may be referred to as a "second" component, or similarly, and the "second" component may be referred to as the "first" component within the scope of the right according to the concept of the present disclosure. It should also be understood that, when a component (e.g., a first component) is referred to as being "connected to" or "coupled to" another component with or without the term "functionally" or "communicatively," the component can be connected or coupled to the other component directly (e.g., wiredly), wirelessly, or via a third component.

As used in connection with various example embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an example embodiment, the module may be implemented in the form of an application-specific integrated circuit (ASIC).

Various example embodiments as set forth herein may be implemented as software (e.g., the program 1440) including one or more instructions that are stored in a storage medium (e.g., the internal memory 1436 or the external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to various example embodiments, a method according to an example embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various example embodiments, each component (e.g., a module or a program) of the above-described components may include a single entity or multiple entities, and some of the multiple entities may be separately disposed in different components. According to various example embodiments, one or more of the above-described components or operations may be omitted, or one or more other components or operations may be added. Alternatively or additionally, a plurality of components (e.g., modules or programs) may be integrated into a single component. In such a case, according to various example embodiments, the integrated component may still perform one or more functions of each of the plurality of components in the same or similar manner as they are performed by a corresponding one of the plurality of components before the integration. According to various example embodiments, operations performed by the module, the program, or another component may be carried out sequentially, in parallel, repeatedly, or heuristically, or one or more of the operations may be executed in a different order or omitted, or one or more other operations may be added.

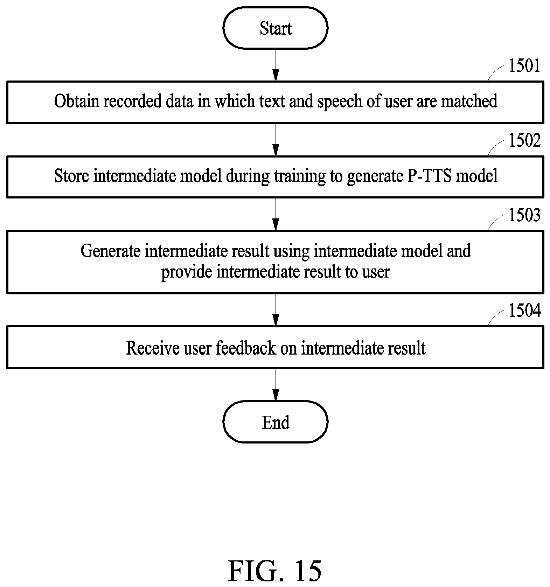

FIG. 15 is a flowchart illustrating an example flow of operations performed by an electronic device according to an embodiment.

Referring to FIG. 15, according to an embodiment, an electronic device (e.g., the electronic device 1401 of FIG. 14) may include a memory (e.g., the memory 1430 of FIG. 14) storing instructions, and a processor (e.g., the processor 1420 of FIG. 14) that executes the instructions. When the instructions are executed by the processor, the processor may record a speech of a user corresponding to a text and obtain recorded data (e.g., the recorded data 530 of FIG. 5) in which the text and the speech of the user are matched in operation 1501, store an intermediate model (e.g., the intermediate model 570 of FIG. 5) that is trained based on a portion of the recorded data while training a speech model to generate a P-TTS model corresponding to the user in operation 1502, generate an intermediate result from the training using the intermediate model and provide the generated intermediate result to the user in operation 1503, and receive feedback from the user on the intermediate result in operation 1504.

According to an embodiment, the processor may request the user for additional voice recording, change a training schedule of the speech model, or end the training of the speech model, based on the feedback.

According to an embodiment, the processor may verify data consistency and quantity of the recorded data and extract training data (e.g., the training data 650 of FIG. 6) to be used for the training.

According to an embodiment, the processor may verify the data consistency of the recorded data based on a noise level, a speaker sameness, and an accent range of the recorded data, and verify whether the number of sets of data for which the data consistency is verified is greater than or equal to a threshold value. When the number is less than or equal to the threshold value, the processor may request the user for the additional voice recording.

According to an embodiment, the intermediate model may be a model that is stored every time the speech model is trained on a preset number of data in the recorded data.

According to an embodiment, the intermediate result may include a sound source generated using the intermediate model and a numerical value indicating a difference between the generated sound source and a corresponding sound source in the recorded data.

According to an embodiment, when receiving feedback that a tone of the intermediate result is not similar to a tone of the user, the processor may increase a ratio of training a tone-related model in models included in the speech model. When receiving feedback that an accent of the intermediate result is not similar to an accent of the user, the processor may increase a ratio of training an accent-related model in the models included in the speech model.

According to an embodiment, when the additional voice recording is requested, the processor may determine a similarity between an additionally recorded speech (obtained in response to the additional voice recording) and the recorded data based on an SNR, a speech volume, and/or a speaking speed of the additionally recorded speech and the recorded data.

According to an embodiment, the processor may verify a distribution of phonetic sequences of the recorded data, and determine a text for which the additional voice recording is requested from the user based on the distribution.

According to an embodiment, an operation method of an electronic device may include an operation of recording a speech of a user corresponding to a text and obtaining recorded data (e.g., the recorded data 530 of FIG. 5) in which the text and the speech of the user are matched, an operation of storing an intermediate model (e.g., the intermediate model 570 of FIG. 5) that is trained based on a portion of the recorded data while training a speech model to generate a P-TTS model corresponding to the user, an operation of generating an intermediate result from the training using the intermediate model and providing the generated intermediate result to the user, and an operation of receiving feedback from the user on the intermediate result.

The operation method of the electronic device may further include an operation of ending the training of the speech model, requesting the user for additional voice recording, or changing a training schedule of the speech model, based on the feedback.

The operation method of the electronic device may further include an operation of verifying data consistency and quantity of the recorded data and extracting training data (e.g., the training data 650 of FIG. 6) to be used for the training.

The operation method of the electronic device may further include an operation of verifying the data consistency of the recorded data based on a noise level, a speaker sameness, and an accent range of the recorded data, an operation of verifying whether the number of sets of data for which the data consistency is verified is greater than or equal to a threshold value, and an operation of requesting the user for additional voice recording when the number is less than or equal to the threshold value.

The intermediate model may be a model that is stored every time the speech model is trained on a preset number of sets of data in the recorded data.

The intermediate result includes a sound source generated using the intermediate model and a numerical value indicating a difference between the generated sound source and a corresponding sound source in the recorded data.

When feedback indicating that a tone of the intermediate result is not similar to a tone of the user is received, the changing may include an operation of increasing a ratio of training a tone-related model in models included in the speech model. When feedback indicating that an accent of the intermediate result is not similar to an accent of the user is received, the changing may include an operation of increasing a ratio of training an accent-related model in the models included in the speech model.

When the additional voice recording is requested, the changing may include an operation of verifying a similarity between an additionally recorded speech (obtained in response to the additional voice recording) and the recorded data based on an SNR, a speech volume, and/or a speaking speed of the additionally recorded speech and the recorded data.

The changing may include an operation of verifying a distribution of phonetic sequences of the recorded data, and an operation of determining a text for which the additional voice recording is requested from the user based on the distribution.

Certain of the above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein.

While the present disclosure has been shown and described with reference to various embodiments thereof, it will be understood by those skilled in the art that various changes in form and details may be made therein without departing from the appended claims.

## Claims

1. An electronic device, comprising:
a memory configured to store instructions; and
a processor configured to execute the instructions,
wherein, when the instructions are executed by the processor, the processor is configured to:
record (1501) a speech of a user corresponding to a text and obtain recorded data in which the text and the speech of the user are matched;
store (1502) an intermediate model trained based on a portion of the recorded data while training a speech model to generate a personalized text-to-speech (P-TTS) model corresponding to the user;
generate (1503) an intermediate result from the training using the intermediate model and provide the generated intermediate result to the user, wherein the intermediate result comprises a sound source generated using the intermediate model; and
receive (1504) feedback from the user on the intermediate result;
**characterized by** the intermediate result further comprising a numerical value indicating a difference between the generated sound source and a corresponding sound source in the recorded data.

2. The electronic device of claim 1, wherein the processor is configured to:
request the user for additional voice recording, change a training schedule of the speech model, or end the training of the speech model, based on the feedback.

3. The electronic device of claim 1, wherein the processor is configured to:
extract training data to be used for the training by verifying data consistency and quantity of the recorded data.

4. The electronic device of claim 3, wherein the processor is configured to:
verify the data consistency of the recorded data based on a noise level, a speaker sameness, and an accent range of the recorded data;
verify whether a number of sets of data for which the data consistency is verified is greater than or equal to a threshold value; and
when the number is less than or equal to the threshold value, request the user for additional voice recording.

5. The electronic device of claim 1, wherein the intermediate model is a model that is stored every time the speech model is trained on a preset number of sets of data in the recorded data.

6. The electronic device of claim 2, wherein the processor is configured to:
when feedback that a tone of the intermediate result is not similar to a tone of the user is received, increase a rate of training a tone-related model in models comprised in the speech model; and
when feedback that an accent of the intermediate result is not similar to an accent of the user is received, increase a rate of training an accent-related model in the models comprised in the speech model.

7. The electronic device of claim 2, wherein the processor is configured to:
when the additional voice recording is requested, verify a similarity between an additionally recorded speech and the recorded data based on a signal-to-noise ratio (SNR), a speech volume, and/or a speaking speed of the additionally recorded speech and the recorded data.

8. The electronic device of claim 2, wherein the processor is configured to:
verify a distribution of phonetic sequences of the recorded data; and
determine a text for which the additional voice recording is to be requested from the user, based on the distribution.

9. An operation method of an electronic device, comprising
recording a speech of a user corresponding to a text and obtaining recorded data in which the text and the speech of the user are matched;
storing an intermediate model trained based on a portion of the recorded data while training a speech model to generate a personalized text-to-speech (P-TTS) model corresponding to the user;
generating an intermediate result from the training using the intermediate model and providing the generated intermediate result to the user, wherein the intermediate result comprises a sound source generated using the intermediate model; and
receiving feedback from the user on the intermediate result;
**characterized in that** the intermediate result further comprises a numerical value indicating a difference between the generated sound source and a corresponding sound source in the recorded data.

10. The operation method of claim 9, further comprising:
ending the training of the speech model, requesting the user for additional voice recording, or changing a training schedule of the speech model, based on the feedback.

11. The operation method of claim 9, further comprising:
extracting training data to be used for the training by verifying data consistency and quantity of the recorded data.

12. The operation method of claim 11, further comprising:
verifying data consistency of the recorded data based on a noise level, a speaker sameness, and an accent range of the recorded data;
verifying whether a number of sets of data for which the data consistency is verified is greater than or equal to a threshold value; and
when the number is less than or equal to the threshold value, requesting the user for additional voice recording.

13. The operation method of claim 9, wherein the intermediate model is a model that is stored every time the speech model is trained on a preset number of sets of data in the recorded data.

## Patentansprüche

1. Elektronische Vorrichtung, die Folgendes umfasst:
einen Speicher, der zum Speichern von Anweisungen konfiguriert ist; und
einen Prozessor, der zum Ausführen der Anweisungen konfiguriert ist,
wobei der Prozessor, wenn die Anweisungen von dem Prozessor ausgeführt werden, zu Folgendem konfiguriert ist:
Aufzeichnen (1501) einer Sprache eines Benutzers, die einem Text entspricht, und Erhalten aufgezeichneter Daten, in denen der Text und die Sprache des Benutzers übereinstimmen;
Speichern (1502) eines Zwischenmodells, das basierend auf einem Teil der aufgezeichneten Daten trainiert wird, während ein Sprachmodell trainiert wird, um ein personalisiertes Text-zu-Sprache(P-TTS)-Modell zu erzeugen, das dem Benutzer entspricht;
Erzeugen (1503) eines Zwischenergebnisses aus dem Training unter Verwendung des Zwischenmodells und Bereitstellen des erzeugten Zwischenergebnisses für den Benutzer, wobei das Zwischenergebnis eine unter Verwendung des Zwischenmodells erzeugte Schallquelle umfasst; und
Empfangen (1504) eines Feedbacks zu dem Zwischenergebnis von dem Benutzer; **gekennzeichnet dadurch, dass** das Zwischenergebnis ferner einen numerischen Wert umfasst, der eine Differenz zwischen der erzeugten Schallquelle und einer entsprechenden Schallquelle in den aufgezeichneten Daten anzeigt.

2. Elektronische Vorrichtung nach Anspruch 1, wobei der Prozessor zu Folgendem konfiguriert ist:
Anfordern einer zusätzlichen Sprachaufnahme von dem Benutzer, Ändern eines Trainingsplans des Sprachmodells oder Beenden des Trainings des Sprachmodells basierend auf dem Feedback.

3. Elektronische Vorrichtung nach Anspruch 1, wobei der Prozessor zu Folgendem konfiguriert ist:
Extrahieren von Trainingsdaten, die für das Training verwendet werden sollen, durch Überprüfen der Datenkonsistenz und der Menge der aufgezeichneten Daten.

4. Elektronische Vorrichtung nach Anspruch 3, wobei der Prozessor zu Folgendem konfiguriert ist:
Überprüfen der Datenkonsistenz der aufgezeichneten Daten basierend auf einem Rauschpegel, einer Sprechergleichheit und einem Akzentbereich der aufgezeichneten Daten;
Überprüfen, ob eine Anzahl von Datensätzen, für die die Datenkonsistenz überprüft wurde, größer als oder gleich einem Schwellenwert ist; und
wenn die Anzahl kleiner als oder gleich dem Schwellenwert ist, Anfordern einer zusätzlichen Sprachaufnahme von dem Benutzer.

5. Elektronische Vorrichtung nach Anspruch 1, wobei das Zwischenmodell ein Modell ist, das jedes Mal gespeichert wird, wenn das Sprachmodell mit einer voreingestellten Anzahl von Datensätzen in den aufgezeichneten Daten trainiert wird.

6. Elektronische Vorrichtung nach Anspruch 2, wobei der Prozessor zu Folgendem konfiguriert ist:
wenn ein Feedback empfangen wird, dass ein Ton des Zwischenergebnisses nicht einem Ton des Benutzers ähnelt, Erhöhen einer Trainingsrate eines tonbezogenen Modells in Modellen, die in dem Sprachmodell enthalten sind; und
wenn ein Feedback empfangen wird, dass ein Akzent des Zwischenergebnisses nicht einem Akzent des Benutzers ähnelt, Erhöhen einer Trainingsrate eines akzentbezogenen Modells in den Modellen, die in dem Sprachmodell enthalten sind.

7. Elektronische Vorrichtung nach Anspruch 2, wobei der Prozessor zu Folgendem konfiguriert ist:
wenn die zusätzliche Sprachaufnahme angefordert wird, Überprüfen einer Ähnlichkeit zwischen einer zusätzlich aufgezeichneten Sprache und den aufgezeichneten Daten basierend auf einem Signal-zu-Rauschverhältnis (SNR), einer Sprachlautstärke und/oder einer Sprechgeschwindigkeit der zusätzlich aufgezeichneten Sprache und der aufgezeichneten Daten.

8. Elektronische Vorrichtung nach Anspruch 2, wobei der Prozessor zu Folgendem konfiguriert ist:
Überprüfen einer Verteilung phonetischer Sequenzen der aufgezeichneten Daten; und
Bestimmen eines Textes, für den die zusätzliche Sprachaufnahme von dem Benutzer angefordert werden soll, basierend auf der Verteilung.

9. Betriebsverfahren einer elektronischen Vorrichtung, das Folgendes umfasst:
Aufzeichnen einer Sprache eines Benutzers, die einem Text entspricht, und Erhalten von aufgezeichneten Daten, in denen der Text und die Sprache des Benutzers übereinstimmen;
Speichern eines Zwischenmodells, das basierend auf einem Teil der aufgezeichneten Daten trainiert wird, während ein Sprachmodell trainiert wird, um ein personalisiertes Text-zu-Sprache(P-TTS)-Modell zu erzeugen, das dem Benutzer entspricht;
Erzeugen eines Zwischenergebnisses aus dem Training unter Verwendung des Zwischenmodells und Bereitstellen des erzeugten Zwischenergebnisses für den Benutzer, wobei das Zwischenergebnis eine unter Verwendung des Zwischenmodells erzeugte Schallquelle umfasst; und
Empfangen eines Feedbacks zu dem Zwischenergebnis von dem Benutzer; **gekennzeichnet dadurch, dass** das Zwischenergebnis ferner einen numerischen Wert umfasst, der eine Differenz zwischen der erzeugten Schallquelle und einer entsprechenden Schallquelle in den aufgezeichneten Daten anzeigt.

10. Betriebsverfahren nach Anspruch 9, das ferner Folgendes umfasst:
Beenden des Trainings des Sprachmodells, Anfordern einer zusätzlichen Sprachaufnahme von dem Benutzer oder Ändern eines Trainingsplans des Sprachmodells basierend auf dem Feedback.

11. Betriebsverfahren nach Anspruch 9, das ferner Folgendes umfasst:
Extrahieren von Trainingsdaten, die für das Training verwendet werden sollen, durch Überprüfen der Datenkonsistenz und der Menge der aufgezeichneten Daten.

12. Betriebsverfahren nach Anspruch 11, das ferner Folgendes umfasst:
Überprüfen der Datenkonsistenz der aufgezeichneten Daten basierend auf einem Rauschpegel, einer Sprechergleichheit und einem Akzentbereich der aufgezeichneten Daten;
Überprüfen, ob eine Anzahl von Datensätzen, für die die Datenkonsistenz überprüft wurde, größer als oder gleich einem Schwellenwert ist; und
wenn die Anzahl kleiner als oder gleich dem Schwellenwert ist, Anfordern einer zusätzlichen Sprachaufnahme von dem Benutzer.

13. Betriebsverfahren nach Anspruch 9, wobei das Zwischenmodell ein Modell ist, das jedes Mal gespeichert wird, wenn das Sprachmodell mit einer voreingestellten Anzahl von Datensätzen in den aufgezeichneten Daten trainiert wird.

## Revendications

1. Dispositif électronique, comprenant :
une mémoire configurée pour stocker des instructions ; et
un processeur configuré pour exécuter les instructions,
où, lorsque les instructions sont exécutées par le processeur, le processeur est configuré pour :
enregistrer (1501) une parole d'un utilisateur correspondant à un texte et obtenir des données enregistrées dans lesquelles le texte et la parole de l'utilisateur sont mis en correspondance ;
stocker (1502) un modèle intermédiaire entraîné sur la base d'une partie des données enregistrées tout en entraînant un modèle vocal afin de générer un modèle texte-parole personnalisé (P-TTS) correspondant à l'utilisateur ;
générer (1503) un résultat intermédiaire à partir de l'entraînement à l'aide du modèle intermédiaire et fournir le résultat intermédiaire généré à l'utilisateur, où le résultat intermédiaire comprend une source sonore générée à l'aide du modèle intermédiaire ; et
recevoir (1504) la rétroaction de l'utilisateur en ce qui concerne le résultat intermédiaire ; **caractérisé en ce que** le résultat intermédiaire comprend en outre une valeur numérique indiquant une différence entre la source sonore générée et une source sonore correspondante dans les données enregistrées.

2. Dispositif électronique selon la revendication 1, où le processeur est configuré pour :
demander à l'utilisateur un enregistrement vocal supplémentaire, modifier un programme d'entraînement du modèle vocal ou mettre fin à l'entraînement du modèle vocal, sur la base de la rétroaction.

3. Dispositif électronique selon la revendication 1, où le processeur est configuré pour :
extraire des données d'entraînement à utiliser pour l'entraînement en vérifiant la cohérence de données et la quantité des données enregistrées.

4. Dispositif électronique selon la revendication 3, où le processeur est configuré pour :
vérifier la cohérence de données des données enregistrées sur la base d'un niveau de bruit, d'une similitude de locuteur et d'une gamme d'accents des données enregistrées ;
vérifier si un nombre d'ensembles de données pour lesquels la cohérence de données est vérifiée est supérieur ou égal à une valeur seuil ; et
lorsque le nombre est inférieur ou égal à la valeur seuil, demander à l'utilisateur un enregistrement vocal supplémentaire.

5. Dispositif électronique selon la revendication 1, où le modèle intermédiaire est un modèle qui est stocké chaque fois que le modèle vocal est formé sur un nombre prédéfini d'ensembles de données dans les données enregistrées.

6. Dispositif électronique selon la revendication 2, où le processeur est configuré pour :
lorsqu'une rétroaction indiquant qu'une tonalité du résultat intermédiaire n'est pas similaire à une tonalité de l'utilisateur est reçue, augmenter un taux d'entraînement d'un modèle lié à la tonalité en modèles compris dans le modèle vocal ; et
lorsqu'une rétroaction indiquant qu'un accent du résultat intermédiaire n'est pas similaire à un accent de l'utilisateur est reçue, augmenter un taux d'entraînement d'un modèle lié à l'accent en modèles compris dans le modèle vocal.

7. Dispositif électronique selon la revendication 2, où le processeur est configuré pour :
lorsque l'enregistrement vocal supplémentaire est demandé, vérifier la similitude entre une parole enregistrée supplémentaire et les données enregistrées sur la base d'un rapport signal sur bruit (SNR) , un volume vocal et/ou une vitesse de parole de la parole enregistrée supplémentaire et des données enregistrées.

8. Dispositif électronique selon la revendication 2, où le processeur est configuré pour :
vérifier une distribution de séquences phonétiques des données enregistrées ; et
déterminer un texte pour lequel l'enregistrement vocal supplémentaire doit être demandé à l'utilisateur, sur la base de la distribution.

9. Procédé de fonctionnement d'un dispositif électronique, comprenant
enregistrer une parole d'un utilisateur correspondant à un texte et obtenir des données enregistrées dans lesquelles le texte et la parole de l'utilisateur sont mis en correspondance ;
stocker un modèle intermédiaire entraîné sur la base d'une partie des données enregistrées tout en entraînant un modèle vocal afin de générer un modèle texte-parole personnalisé (P-TTS) correspondant à l'utilisateur ;
générer un résultat intermédiaire à partir de l'entraînement en utilisant le modèle intermédiaire et fournir le résultat intermédiaire généré à l'utilisateur, où le résultat intermédiaire comprend une source sonore générée à l'aide du modèle intermédiaire ; et
recevoir la rétroaction de l'utilisateur en ce qui concerne le résultat intermédiaire ; **caractérisé en ce que** le résultat intermédiaire comprend en outre une valeur numérique indiquant une différence entre la source sonore générée et une source sonore correspondante dans les données enregistrées.

10. Procédé de fonctionnement selon la revendication 9, comprenant en outre :
mettre fin à l'entraînement du modèle vocal, demander à l'utilisateur un enregistrement vocal supplémentaire, ou modifier un programme d'entraînement du modèle vocal, sur la base de la rétroaction.

11. Procédé de fonctionnement selon la revendication 9, comprenant en outre :
extraire des données d'entraînement à utiliser pour l'entraînement en vérifiant la cohérence de données et la quantité des données enregistrées.

12. Procédé de fonctionnement selon la revendication 11, comprenant en outre :
vérifier la cohérence de données des données enregistrées sur la base d'un niveau de bruit, d'une similitude de locuteur et d'une gamme d'accents des données enregistrées ;
vérifier si un nombre d'ensembles de données pour lesquels la cohérence de données est vérifiée est supérieur ou égal à une valeur seuil ; et
lorsque le nombre est inférieur ou égal à la valeur seuil, demander à l'utilisateur un enregistrement vocal supplémentaire.

13. Procédé de fonctionnement selon la revendication 9, où le modèle intermédiaire est un modèle qui est stocké chaque fois que le modèle vocal est entraîné sur un nombre prédéfini d'ensembles de données dans les données enregistrées.
